# FASCICULE DE BREVET EUROPEEN

(11) **EP 4 078 025 B1**
(45) Date de publication et mention de la délivrance du brevet: **04.12.2024**
(21) Numéro de dépôt: 20833878.0
(22) Date de dépôt: 18.12.2020
(51) Int. Cl.: F21S 43/237, F21S 43/245, F21S 43/247, F21V 8/00

(54) **GUIDE DE LUMIÈRE AVEC FACE D'ENTRÉE DE COLLIMATION PARTIELLE**
LICHTLEITER MIT TEILWEISE KOLLIMIERENDER EINGANGSFLÄCHE
LIGHT GUIDE HAVING A PARTIALLY COLLIMATING INPUT FACE

(30) Priorité: 20.12.2019 FR 1915234
(43) Date de publication de la demande: 26.10.2022
(73) Titulaire: Valeo Vision Belgique, 7822 Meslin l'Evêque (BE)
(72) Inventeur: VALOIS, Christophe, 93012 BOBIGNY (FR)
(74) Mandataire: Valeo Visibility
(86) Numéro de dépôt international: PCT/EP2020/087328
(87) Numéro de publication internationale: WO 2021/123386

(56) Documents cités:
- EP-A1- 2 711 610
- FR-A1- 3 061 537
- US-A1- 2007 147 087

## Description

### Domaine technique

L'invention a trait au domaine de l'éclairage et de la signalisation lumineuse, notamment pour véhicule automobile.

### Technique antérieure

Dans différentes applications lumineuses, en particulier dans le domaine de la signalisation lumineuse, des guides de lumière sont couramment utilisés. Ils présentent l'avantage de pouvoir amener de la lumière à des endroits confinés, à distance de la source lumineuse. Ils permettent également de diffuser de la lumière de manière continue et homogène suivant des profils courbes. A cet effet, il est important d'assurer une propagation contrôlée de la lumière dans le guide.

Le document de brevet publié FR 2 888917 A divulgue des guides optiques pourvus, à leurs faces d'entrée, de collimateurs, notamment sous la forme de lentille de Fresnel, symétriques en rotation. Ces collimateurs permettent à la lumière de se propager suivant la direction principale du guide en vue d'atteindre une face de sortie, notamment du type lenticulaire à l'extrémité distale du guide. L'utilisation de tels collimateurs pour une guide optique avec des faces de découplage et de sortie latérales n'est pas appropriée car la lumière se propageant longitudinalement va manquer de rencontrer la face de découplage et, par voie de conséquent, la face de sortie.

Le document de brevet publié EP 1 739 468 A1 divulgue un guide optique avec une face d'entrée particulière conçue pour rendre plus homogène la lumière au début du guide, c'est-à-dire à proximité de la face d'entrée. La face d'entrée présente des zones de réflexion totale configurées pour réfléchir la lumière avec des angles importants par rapport à la direction principale du guide, de manière à favoriser les réflexions sur la face de guidage du guide et ainsi assurer un certain niveau d'homogénéité de lumière à proximité de la face d'entrée. Ces mesures sont intéressantes lorsque la face de sortie ou une des faces de sortie de la lumière est proche de la face d'entrée. Elles ne sont plus utiles à partir d'une certaine distance de la face d'entrée.

Le document de brevet publié FR 3061537 A divulgue une nappe de guidage présentant une portion d'entrée destinée à être couplée à une source lumineuse et une portion de guidage comportant des éléments de déviation vers une face de sortie.

### Exposé de l'invention

L'invention a pour objectif de pallier au moins un des inconvénients de l'état de la technique susmentionné. Plus particulièrement, l'invention a pour objectif de permettre à un guide de lumière d'éclairer une face de sortie latérale de manière homogène et ce en particulier sur une grande longueur.

L'invention a pour objet un guide de lumière en matériau transparent ou translucide, s'étendant suivant une direction principale et comprenant une face d'entrée de la lumière émise par une source lumineuse, ladite face d'entrée étant profilée de manière à former un collimateur ; une face de guidage par réflexion interne totale de la lumière dans le matériau transparent ou translucide ; une face de sortie de la lumière ; et une face de découplage avec des facettes de réflexion de la lumière vers la face de sortie, ladite face de découplage étant transversalement opposée à la face de sortie . Selon l'invention, au moins une portion de la face d'entrée est une surface en trois dimensions formée par une translation d'un profil plan en deux dimensions selon une direction transversale, dite portion de profil constant, de manière à ne pas réaliser de collimation de la lumière dans un plan longitudinal comprenant la direction transversale et à réaliser une collimation dans un plan longitudinal perpendiculaire à ladite direction transversale.

Le profil plan en deux dimensions peut être encore appelé le profil générateur.

La face d'entrée est frontale et les faces de guidage, de découplage et de sortie sont latérales.

Le guide de lumière présente une section transversale de contour fermé et arrondi, préférentiellement circulaire ou ovale.

Compte tenu que la section transversale du guide de lumière présente un contour fermé et arrondi, il est entendu que la portion de profil constant peut varier dès lors qu'elle est adjacente au contour de la face d'entrée. En d'autres termes, la portion de profil constant est constante le long de la direction transversale entre les limites dudit profil qui varie le long de la direction transversale compte tenu du contour fermé et arrondi de la face d'entrée. Autrement dit, ladite portion présente une forme de base constante, plus ou moins tronquée en fonction de la forme dudit contour. Selon un mode avantageux de l'invention, la direction transversale est perpendiculaire à la direction principale.

Selon l'invention, la direction transversale correspond à une direction d'opposition entre la face de découplage et la face de sortie. La direction d'opposition en question passe par un centre de la face de découplage et un centre de la face de sortie.

Selon un exemple, le guide de lumière peut présenter une section transversale permettant aux rayons lumineux déviés ou réfléchis par la face de découplage d'atteindre directement la face de sortie, sans être réfléchis par les autres faces du guide de lumière. En d'autres termes, le trajet desdits rayons lumineux déviés ou réfléchis est un trajet direct de la face de couplage vers la face de sortie. Ainsi, lesdits rayons ne sont pas réfléchis sur les autres faces du guide, ce qui permet d'éviter la perte d'une partie de ces rayons et donc d'avoir la majorité de ces rayons atteignant la face de sortie.

A titre d'exemple, la section transversale présente une largeur, considérée dans la direction transversale, sensiblement égale à l'épaisseur, considérée dans une direction perpendiculaire à la direction transversale et à la direction principale. Ici, par « sensiblement égale », on entend une égalité à +/- 10% près.

A titre d'exemple, la section transversale est généralement circulaire ou ovale, avec un contour fermé et arrondi.

Selon un mode avantageux de l'invention, la face d'entrée est formée à partir d'un profil général comprenant le profil plan en deux dimensions. Ledit profil plan en deux dimensions présente une hauteur qui correspond à au moins 50% de la hauteur maximale dudit profil général, lesdites hauteurs étant considérées dans une direction perpendiculaire à ladite direction transversale.

Selon un mode avantageux de l'invention, la face d'entrée est formée à partir d'un profil général comprenant le profil plan en deux dimensions. Ledit profil plan en deux dimensions présente une hauteur qui correspond à 100% de la hauteur maximale dudit profil général, lesdites hauteurs étant considérées dans une direction perpendiculaire à ladite direction transversale.

Selon un mode avantageux de l'invention, la totalité de la face d'entrée est constante le long d'une direction transversale. En d'autres termes, le profil générateur constitue le profil général formant la face d'entrée.

Selon un mode avantageux de l'invention, la portion de profil constant de la face d'entrée comprend une partie centrale convexe configurée pour réfracter la lumière de la source lumineuse incidente sur ladite partie centrale.

Selon un mode avantageux de l'invention, la portion de profil constant de la face d'entrée comprend deux parties latérales formant chacune un ressaut avec une zone proximale configurée pour réfracter la lumière de la source lumineuse incidente sur ladite partie proximale et une zone distale configurée pour réfléchir par réflexion interne totale la lumière réfractée par ladite zone proximale.

Selon un mode avantageux de l'invention, la portion de profil constant présente ladite constance sur une partie seulement de l'étendue totale de la face d'entrée, considérée suivant ladite direction transversale.

Selon un mode avantageux de l'invention, la portion de profil constant présente ladite constance sur une totalité de l'étendue totale de la face d'entrée, considérée suivant ladite direction transversale.

Selon un mode avantageux de l'invention, la portion de profil constant correspond à 50% ou plus de la face d'entrée.

Selon un mode avantageux de l'invention, la face de sortie s'étend le long de la direction principale et présente une hauteur inférieure ou égale à 30% d'un diamètre moyen du guide lumière. Par diamètre moyen on entend une moyenne arithmétique, sur une révolution, du diamètre de la section transversale du guide optique.

Selon un mode avantageux de l'invention, la face de découplage est opposée à la face de sortie par rapport à la direction principale.

Les mesures de l'invention sont intéressantes en ce qu'elles permettent d'optimiser le rendement optique en réduisant la distance parcourue par la partie de la lumière collimatée et ainsi réduire les pertes par absorption dans la matière transparent ou translucide du guide optique. Cette partie de la lumière est alors utile pour éclairer une partie distale de la face de sortie. Les mesures de l'invention sont ainsi particulièrement intéressantes pour les guides de lumière particulièrement longs, comme par exemple pour une fonction de troisième feu stop de véhicule s'étendant sur toute la largeur dudit véhicule.

### Brève description des dessins

[Fig 1] est une vue arrière d'un guide de lumière selon l'invention ;
[Fig 2] est une vue avant de l'extrémité avant du guide de lumière de la figure 2 ;
[Fig 3] est une représentation schématique du parcours de la lumière dans un plan longitudinal perpendiculaire à la direction transversale suivant laquelle le profil de la face d'entrée est généré ;
[Fig 4] est une représentation schématique du parcours de la lumière dans un plan longitudinal comprenant la direction transversale suivant laquelle le profil de la face d'entrée est généré.

### Description détaillée

Dans la présente divulgation et notamment dans la description qui va suivre, la notion de direction principale du guide de lumière est à comprendre à l'endroit du guide de lumière auquel il est fait référence. Cette nuance est importante pour les guides de lumière non-rectilignes, car cette direction change le long du guide de lumière. Aussi la notion de guide de lumière désigne une pièce optique apte à guider de la lumière par réflexion interne totale de cette lumière, par exemple d'une zone d'entrée à une zone de sortie.

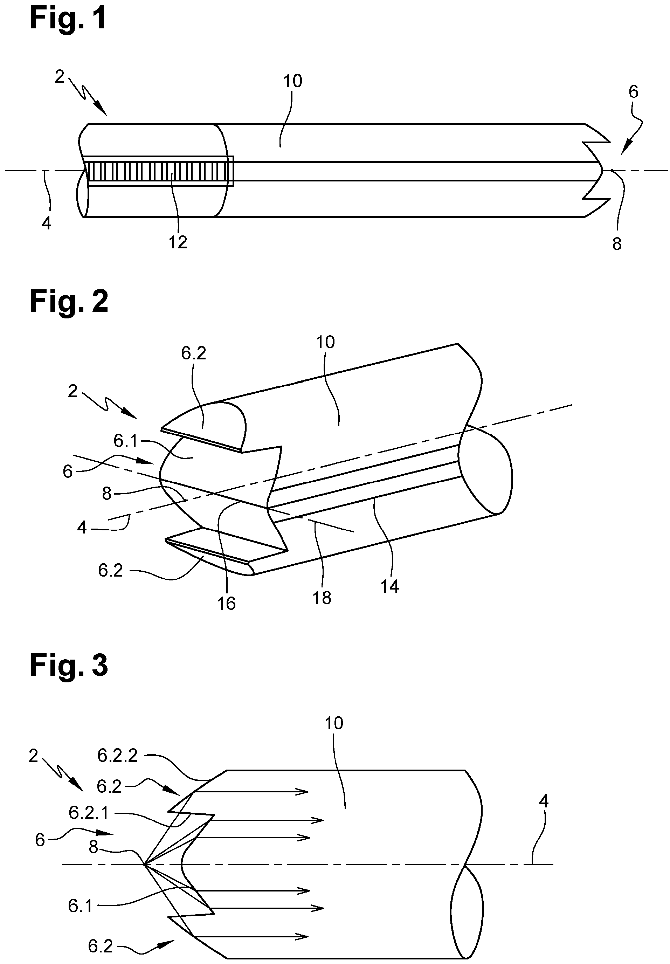

La figure 1 illustre un guide de lumière selon l'invention.

Le guide de lumière 2 est un élément optique en matériau transparent ou translucide s'étendant suivant une direction principale 4, étant étendu que cette direction principale 4 n'est pas nécessairement rectiligne. Le guide de lumière 2 présente une section transversale généralement circulaire ou ovale, formant un contour fermé et arrondi. Le guide de lumière 2 comprend à une extrémité frontale une face d'entrée 6 de la lumière produite par une source lumineuse 8, représentée schématiquement par un point, disposée en face de ladite face d'entrée 6. Cette dernière présente un profil spécialement conçu pour réaliser une collimation d'une partie de la lumière incidente sur ladite face. Ce profil sera détaillé en relation avec la figure 2. Le guide de lumière 2 comprend une face latérale de guidage 10 par réflexion de la lumière se propageant dans la matière transparente ou translucide du guide en question. Cette face de guidage 10 s'étend sur essentiellement toute la longueur du guide de lumière 2, suivant la direction principale 4 dudit guide. La face de guidage 10 correspond au dioptre formé par la surface latérale extérieure longitudinale du guide de lumière 2, entre la matière dudit guide et l'air ambiant. Le guide de lumière 2 comprend une face latérale de découplage 12 présentant une série de facettes dimensionnées et orientées pour découpler la lumière se propageant le long du guide de lumière 2 en la déviant vers une face latérale de sortie (non visible à la figure 1). Les faces de découplage 12 et de sortie sont adjacentes à la face de guidage 10. Ces différentes caractéristiques à l'exception du profil de la face d'entrée, sont en soi classiques et bien connues de l'homme de métier, le principe général de propagation de lumière et de sortie de lumière dans un guide de lumière étant en soi bien connu.

La figure 2 est une vue en perspective avant de l'extrémité frontale du guide de lumière de la figure 1. On peut observer la face de sortie 14 directement adjacente à la face de guidage 10 et opposée à la face de découplage (non visible à la figure 2) suivant la direction d'opposition 16. La face de sortie 14 est représentée par deux traits parallèles pour des raisons de clarté d'exposé, étant toutefois entendu que cette face ne présente pas nécessairement de frontière ou limite physique avec la face de guidage 10. La face d'entrée 6 présente un profil de collimation qui est constant suivant une direction transversale 18 orientée suivant la direction d'opposition 16 entre les faces de découplage et de sortie 14. En d'autres termes, la surface de la face d'entrée 6 est formée ou générée par un profil constant se déplaçant suivant la direction d'opposition 16. Une telle génération de surface est couramment désignée en dessin vectoriel par le terme « extrusion », par analogie au procédé industriel d'extrusion de matière. Le guide de lumière est toutefois avantageusement réalisé par injection de matière plastique dans un moule et non par extrusion. La face d'entrée 6 est une surface en trois dimensions formée par une translation, selon la direction transversale 18, du profil plan en deux dimensions. Le profil en question, encore appelé le profil générateur, correspond à une section de la face d'entrée 6 suivant un plan longitudinal perpendiculaire à la direction transversale 18 (qui en l'occurrence est confondue avec la direction d'opposition 16). Il comprend une partie centrale 6.1 de forme convexe (vu depuis l'extérieur, par exemple depuis la source lumineuse 8) et deux parties latérales 6.2 formant chacune un ressaut. La partie centrale 6.1 est configurée pour réfracter la lumière incidente suivant des directions parallèles à la direction principale 4. Les parties latérales 6.2 sont configurées pour réfléchir, par réflexion totale, la lumière suivant des directions parallèles à la direction principale 4. Un tel profil correspond à un profil de lentille de Fresnel.

La face d'entrée 6, qui vient d'être décrite, présente la particularité de présenter une forme identique de son profil le long d'une direction transversale 18, en l'occurrence la direction d'opposition 16 entre les faces de découplage 12 (figure 1) et de sortie 14. Cette particularité a pour effet que le profil en question, initialement conçu comme profil collimateur, ne va en fait collimater la lumière que dans un plan perpendiculaire à la direction transversale 18 le long de laquelle le profil est constant. Cela signifie que dans un plan longitudinal comprenant la direction transversale 18, la lumière ne sera pas du tout collimatée. En d'autres termes, une partie de la lumière émise par la source lumineuse va alors être collimatée, en l'occurrence la lumière émise dans le plan longitudinal perpendiculaire à la direction transversale 18. L'intérêt de cette mesure est que les rayons lumineux correspondant à cette partie de lumière vont se propager parallèlement à la direction principale du guide, du moins sur une certaine distance, et, partant, subir peu ou moins de réflexions que le reste de la lumière. Cette réduction du nombre de réflexions, par un parcours rectiligne et parallèle à la direction principale du guide, a pour effet de réduire le trajet total dans la matière transparente ou translucide et, partant, les pertes par absorption inhérentes à la matière en question.

Si la face d'entrée formait un collimateur complet ou parfait, c'est-à-dire un collimateur tel que la totalité ou quasi-totalité de lumière entrant dans le guide optique se propage parallèlement à la direction principale du guide optique, il n'y aurait aucune réflexion et la face de découplage ne pourrait pas réfléchir une partie de la lumière vers la face de sortie. Pour ces raisons, une partie seulement de la lumière est collimatée, permettant ainsi de réduire les pertes par absorption précisément de cette partie de lumière destinée à alimenter une portion distale du guide de lumière. Il est à noter dans le cas d'un guide de lumière parfaitement rectiligne, cette partie de lumière collimatée va, à partir d'une certaine distance de propagation et en raison de l'imperfection de la collimation et du guide de lumière, être incident sur la face de guidage et/ou la face de découplage et y subir des réflexions. En d'autres termes, la collimation partielle de la lumière entrant dans le guide optique va retarder les réflexions successives sur la face de guidage et sur la face de découplage pour une partie de la lumière.

La figure 3 illustre la collimation partielle de la lumière. La figure 3 est une représentation schématique du parcours de la lumière dans un plan longitudinal perpendiculaire à la direction transversale 18 suivant laquelle le profil de la face d'entrée est constant. En référence à la figure 2, le plan en question passe par la source lumineuse 8 et la direction principale 4 et est perpendiculaire à la direction transversale 18.

On peut observer que la lumière émise par la source lumineuse 8, incidente sur la partie centrale 6.1 du profil convexe de la face d'entrée sont réfractés de manière à être parallèles à la direction principale 4. Les rayons en question forment un cône centré sur la source lumineuse 8, orienté suivant la direction principale 4 et avec un angle d'ouverture supérieur à 70° et/ou inférieure à 90°.

On peut aussi observer que la lumière émise par la source lumineuse 8, incidente sur les parties latérales 6.2 du profil de la face d'entrée 6, sont réfractés et ensuite réfléchis suivant des directions parallèles la direction principale 4. Chacune des parties latérales 6.2 forme un ressaut avec une zone proximale 6.2.1 configurée pour réfracter la lumière de la source lumineuse incidente sur ladite partie proximale et une zone distale 6.2.2 configurée pour réfléchir par réflexion totale la lumière réfractée par ladite zone proximale.

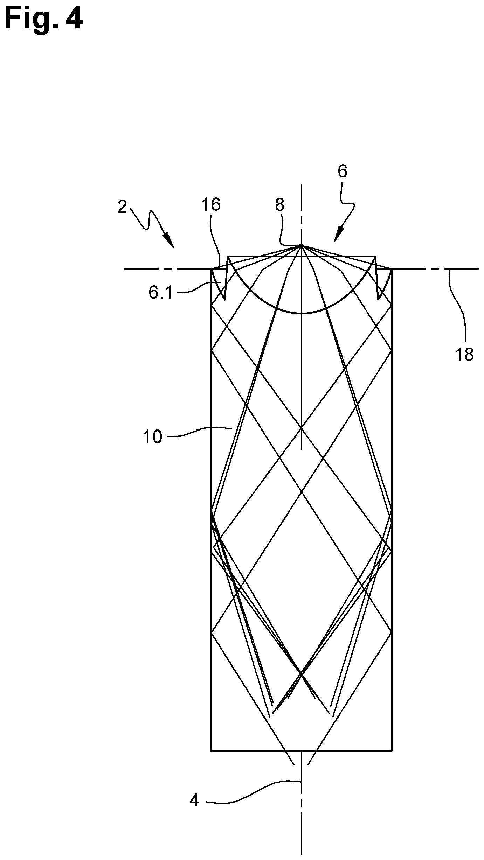

La figure 4 illustre l'absence de collimation de la lumière dans un plan comprenant la direction transversale 18 le long de laquelle le profil de la face d'entrée est constant. La figure 4 est une représentation schématique du parcours de la lumière dans un plan longitudinal comprenant la direction transversale 18 le long de laquelle le profil de la face d'entrée présente une forme identique.

On peut observer que tous les rayons incidents sur la partie centrale 6.1 de la face d'entrée 6, plus précisément sur la droite de ladite partie centrale 6.1 correspondant à la direction transversale 18 le long de laquelle le profil de la face d'entrée est constant, sont réfractés et ensuite réfléchis par la face de guidage 10. Ces rayons ne sont pas collimatés et peuvent participer à l'éclairage d'une partie proximale de la zone de sortie. Ici, le terme « constant » se réfère à une forme identique du profil de la face d'entrée le long de la direction transversale.

Les figures 3 et 4 décrites ci-avant illustrent la déviation des rayons lumineux par la face d'entrée dans deux plans perpendiculaires où les effets sont maximums, à savoir que dans le plan longitudinal perpendiculaire à la direction transversale suivant laquelle le profil de la face d'entrée est constant la collimation est effective et dans le plan longitudinal comprenant ladite direction transversale, il n'y a aucune collimation. Entre ces deux plans, en particulier à proximité du plan longitudinal perpendiculaire à la direction transversale suivant laquelle le profil de la face d'entrée est constant, il y a une collimation approchée en ce que les rayons sont proches d'être parallèles à la direction principale et ainsi ne sont incidents avec la face de guidage qu'à une certaine distance de la face d'entrée, et ce avec un angle important, conduisant à des réflexions avec un même angle important. Cela signifie que ces rayons vont également voir leurs parcours, sur une distance du guide de lumière donnée, raccourcis et donc être moins sujets à pertes par effet d'absorption par la matière transparente ou translucide du guide de lumière.

Selon l'invention telle que revendiquée, la direction effective de collimation est angulairement décalée par rapport à la direction d'opposition des zones de découplage et de sortie, en l'occurrence de 90° puisque la direction transversale suivant laquelle le profil de la face d'entrée est constant est confondue avec la direction d'opposition des zones de découplage et de sortie. Une telle configuration est avantageuse en ce que les rayons proches du plan longitudinal perpendiculaire à la direction transversale suivant laquelle le profil de la face d'entrée est constant, subissant une collimation approchée vont pouvoir se propager par réflexions successives sur la face de guidage sans interférences avec les faces de découplage et de sortie, du moins au début du guide optique. Après une certaine distance le long du guide optique, les réflexions successives génèrent des décalages ayant pour effet de mélanger les rayons et leur permettre de rencontrer la face de découplage et ensuite la face de sortie. Il est cependant possible de décaler la direction de collimation par rapport à celle du mode de réalisation décrit ci-avant, dans des modes réalisations qui ne sont pas selon l'invention revendiquée.

De manière générale, en fonction de la longueur effective du guide de lumière et des besoins en éclairage de la face de sortie, la face d'entrée peut être configurée pour collimater une partie plus ou moins grande de la lumière émise et incidente sur la face d'entrée.

A titre d'exemple, il est possible de prévoir une face d'entrée dont une partie forme un collimateur avec un profil constant ou quasi-constant autour de la direction principale sur un secteur donné (par exemple 180°) et, à côté de cela, un profil constant le long d'une direction transversale. En d'autres termes, la face d'entrée peut présenter une partie, par exemple une moitié, correspondant à un demi-collimateur classique et une partie restante, en l'occurrence l'autre moitié, correspondant à la moitié de la face d'entrée du mode de réalisation des figures 1 à 4. Ladite partie restante, ou ladite autre moitié, est la portion de la face d'entrée qui est une surface en trois dimensions formée par une translation du profil générateur selon la direction transversale. Ladite portion est autrement appelée portion de profil constant.

Aussi à titre d'exemple, il est possible de prévoir une face d'entrée dont une partie seulement du profil est constant le long de la direction transversale, dite portion de profil constant, le reste du profil pouvant rester constant par rotation autour de la direction principale. En référence à la figure 2, une partie centrale horizontale présenterait un sous profil constant le long de la direction transversale 18, c'est-à-dire avec une hauteur, dans une direction perpendiculaire à la direction transversale 18, correspondant à une fraction de la hauteur totale de la face d'entrée, le reste de la face d'entrée, c'est-à-dire au-dessus et au-dessous d'une telle partie centrale horizontale, formerait une surface de collimateur, symétrique de révolution autour de l'axe principal 4.

## Revendications

1. Guide de lumière (2) en matériau transparent ou translucide, s'étendant suivant une direction principale (4) et comprenant :
- une face d'entrée (6) de la lumière émise par une source lumineuse (8), ladite face d'entrée (6) étant profilée de manière à former un collimateur ;
- une face de guidage (10) par réflexion interne totale de la lumière dans le matériau transparent ou translucide ;
- une face de sortie (14) de la lumière ; et
- une face de découplage (12) avec des facettes de réflexion de la lumière vers la face de sortie (14), ladite face de découplage (12) étant transversalement opposée à la face de sortie (14) ;
et dans lequel au moins une portion de la face d'entrée (6) est une surface en trois dimensions formée par une translation d'un profil plan en deux dimensions selon une direction transversale (18), dite portion de profil constant, de manière à ne pas réaliser de collimation de la lumière dans un plan longitudinal comprenant la direction transversale (18) et à réaliser une collimation dans un plan longitudinal perpendiculaire à ladite direction transversale (18);
le guide de lumière (2) étant **caractérisé en ce que** la direction transversale (18) correspond à une direction d'opposition (16) entre la face de découplage (12) et la face de sortie (14).

2. Guide de lumière (2) selon la revendication 1, **caractérisé en ce que** la direction transversale (18) est perpendiculaire à la direction principale (4).

3. Guide de lumière (2) selon l'une des revendications 1 à 2, **caractérisé en ce que** la face d'entrée (6) est formée à partir d'un profil général comprenant le profil plan en deux dimensions et **en ce que** ledit profil plan en deux dimensions présente une hauteur qui correspond à au moins 50% de la hauteur maximale dudit profil général, lesdites hauteurs étant considérées dans une direction perpendiculaire à ladite direction transversale.

4. Guide de lumière (2) selon l'une des revendications 1 à 3, **caractérisé en ce que** la face d'entrée (6) est formée à partir d'un profil général comprenant le profil plan en deux dimensions et **en ce que** ledit profil plan en deux dimensions présente une hauteur qui correspond à 100% de la hauteur maximale dudit profil général, lesdites hauteurs étant considérées dans une direction perpendiculaire à ladite direction transversale.

5. Guide de lumière (2) selon l'une des revendications 1 à 4, **caractérisé en ce que** la portion de profil constant de la face d'entrée (6) comprend une partie centrale convexe (6.1) configurée pour réfracter la lumière de la source lumineuse (8), incidente sur ladite partie centrale (6.1).

6. Guide de lumière (2) selon la revendication 5, **caractérisé en ce que** la portion de profil constant de la face d'entrée (6) comprend deux parties latérales (6.2) formant chacune un ressaut avec une zone proximale (6.2.1) configurée pour réfracter la lumière de la source lumineuse (8), incidente sur ladite partie proximale (6.2.1) et une zone distale (6.2.2) configurée pour réfléchir par réflexion interne totale la lumière réfractée par ladite zone proximale (6.2.1).

7. Guide de lumière (2) selon l'une des revendications 1 à 6, **caractérisé en ce que** la portion de profil constant présente ladite constance sur une partie seulement de l'étendue totale de la face d'entrée (6), considérée suivant ladite direction transversale (18).

8. Guide de lumière (2) selon l'une des revendications 1 à 6, **caractérisé en ce que** la portion de profil constant présente ladite constance sur une totalité de l'étendue totale de la face d'entrée (6), considérée suivant ladite direction transversale (18).

9. Guide de lumière (2) selon l'une des revendications 1 à 8, **caractérisé en ce que** la face de sortie (14) s'étend le long de la direction principale (4) et présente une hauteur inférieure ou égale à 30% d'un diamètre moyen du guide de lumière.

10. Guide de lumière (2) selon l'une des revendications 1 à 9, **caractérisé en ce que** la face de découplage (12) est opposée à la face de sortie (14) par rapport à la direction principale (4).

## Patentansprüche

1. Lichtleiter (2) aus transparentem oder transluzentem Material, der sich entlang einer Hauptrichtung (4) erstreckt und umfassend:
- eine Eingangsfläche (6) für Licht, das von einer Lichtquelle (8) ausgesendet wird, wobei die Eingangsfläche (6) so profiliert ist, dass sie einen Kollimator bildet;
- eine Führungsfläche (10) durch vollständige interne Reflexion von Licht in dem transparenten oder transluzenten Material;
- eine Ausgangsfläche (14) für das Licht; und
- eine Auskoppelungsfläche (12) mit lichtreflektierenden Facetten in Richtung der Ausgangsfläche (14), wobei die Auskoppelungsfläche (12) quer gegenüber der Ausgangsfläche (14) liegt;
und wobei mindestens ein Abschnitt der Eingangsfläche (6) eine dreidimensionale Oberfläche ist, die durch eine Translation eines zweidimensionalen ebenen Profils entlang einer Querrichtung (18) gebildet wird, wobei dieser Abschnitt als Abschnitt mit konstantem Profil bezeichnet wird, so dass keine Kollimation des Lichts in einer die Querrichtung (18) umfassenden Längsebene und eine Kollimation in einer Längsebene senkrecht zu der Querrichtung (18) erfolgt;
wobei der Lichtleiter (2) **dadurch gekennzeichnet ist, dass** die Querrichtung (18) einer Gegenrichtung (16) zwischen der Auskoppelungsfläche (12) und der Ausgangsfläche (14) entspricht.

2. Lichtleiter (2) nach Anspruch 1, **dadurch gekennzeichnet, dass** die Querrichtung (18) senkrecht zu der Hauptrichtung (4) ist.

3. Lichtleiter (2) nach einem der Ansprüche 1 bis 2, **dadurch gekennzeichnet, dass** die Eingangsfläche (6) aus einem allgemeinen Profil gebildet ist, das das zweidimensionale ebene Profil umfasst, und dass das zweidimensionale ebene Profil eine Höhe aufweist, die mindestens 50 % der maximalen Höhe des allgemeinen Profils entspricht, wobei die Höhen in einer Richtung senkrecht zu der Querrichtung betrachtet werden.

4. Lichtleiter (2) nach einem der Ansprüche 1 bis 3, **dadurch gekennzeichnet, dass** die Eingangsfläche (6) aus einem allgemeinen Profil gebildet ist, das das zweidimensionale ebene Profil umfasst, und dass das zweidimensionale ebene Profil eine Höhe aufweist, die 100 % der maximalen Höhe des allgemeinen Profils entspricht, wobei die Höhen in einer Richtung senkrecht zu der Querrichtung betrachtet werden.

5. Lichtleiter (2) nach einem der Ansprüche 1 bis 4, **dadurch gekennzeichnet, dass** der Abschnitt mit konstantem Profil der Eingangsfläche (6) einen konvexen Mittelteil (6.1) umfasst, der so konfiguriert ist, dass er Licht von der Lichtquelle (8) bricht, das auf den Mittelteil (6.1) einfällt.

6. Lichtleiter (2) nach Anspruch 5, **dadurch gekennzeichnet, dass** der Abschnitt mit konstantem Profil der Eingangsfläche (6) zwei Seitenteile (6.2) umfasst, die jeweils einen Vorsprung mit einem proximalen Bereich (6.2.1) bilden, der so konfiguriert ist, dass er das auf den proximalen Bereich (6.2.1) einfallende Licht der Lichtquelle (8) bricht, und einem distalen Bereich (6.2.2), der so konfiguriert ist, dass er das von dem proximalen Bereich (6.2.1) gebrochene Licht durch interne Totalreflexion reflektiert.

7. Lichtleiter (2) nach einem der Ansprüche 1 bis 6, **dadurch gekennzeichnet, dass** der Abschnitt mit konstantem Profil die Konstanz nur über einen Teil der Gesamtausdehnung der Eingangsfläche (6), betrachtet in der Querrichtung (18), aufweist.

8. Lichtleiter (2) nach einem der Ansprüche 1 bis 6, **dadurch gekennzeichnet, dass** der Abschnitt mit konstantem Profil die Konstanz über die Gesamtheit der Gesamtausdehnung der Eingangsfläche (6), betrachtet in der Querrichtung (18), aufweist.

9. Lichtleiter (2) nach einem der Ansprüche 1 bis 8, **dadurch gekennzeichnet, dass** sich die Ausgangsfläche (14) entlang der Hauptrichtung (4) erstreckt und eine Höhe von weniger als oder gleich 30 % eines mittleren Durchmessers des Lichtleiters aufweist.

10. Lichtleiter (2) nach einem der Ansprüche 1 bis 9, **dadurch gekennzeichnet, dass** die Auskoppelungsfläche (12) der Ausgangsfläche (14) in Bezug auf die Hauptrichtung (4) gegenüberliegt.

## Claims

1. A light guide (2) made of transparent or translucent material, extending in a main direction (4) and comprising:
- an entrance face (6) for the light emitted by a light source (8), said entrance face (6) being profiled to form a collimator;
- a guide face (10) for guiding the light through the transparent or translucent material by total internal reflection;
- a light exit face (14); and
- a decoupling face (12) for decoupling the light toward the exit face (14) by means of reflection facets, said decoupling face (12) being transversely opposite to the exit face (14);
and wherein at least one portion of the entrance face (6) is a three-dimensional surface formed by translating a two-dimensional planar profile in a transverse direction (18), referred to as a portion of constant profile, so as not to collimate the light in a longitudinal plane comprising the transverse direction (18) and to collimate in a longitudinal plane perpendicular to said transverse direction (18)
the light guide (2) being **characterized in that** the transverse direction (18) corresponds to a direction of opposition (16) between the decoupling face (12) and the exit face (14).

2. The light guide (2) as claimed in claim 1, **characterized in that** the transverse direction (18) is perpendicular to the main direction (4).

3. The light guide (2) as claimed in one of claims 1 to 2, **characterized in that** the entrance face (6) is formed from a general profile comprising the two-dimensional planar profile and **in that** said two-dimensional planar profile has a height that corresponds to at least 50% of the maximum height of said general profile, said heights being considered in a direction perpendicular to said transverse direction.

4. The light guide (2) as claimed in one of claims 1 to 3, **characterized in that** the entrance face (6) is formed from a general profile comprising the two-dimensional planar profile and **in that** said two-dimensional planar profile has a height that corresponds to 100% of the maximum height of said general profile, said heights being considered in a direction perpendicular to said transverse direction.

5. The light guide (2) as claimed in one of claims 1 to 4, **characterized in that** the portion of constant profile of the entrance face (6) comprises a convex central portion (6.1) that is configured to refract the light from the light source (8) incident on said central portion (6.1).

6. The light guide (2) as claimed in claim 5, **characterized in that** the portion of constant profile of the entrance face (6) comprises two lateral portions (6.2) each forming a kink with a proximal region (6.2.1) configured to refract the light from the light source (8) incident on said proximal portion (6.2.1) and a distal region (6.2.2) configured to reflect, by total internal reflection, the light refracted by said proximal region (6.2.1).

7. The light guide (2) as claimed in one of claims 1 to 6, **characterized in that** the portion of constant profile has said constancy over only part of the total extent of the entrance face (6), considered in said transverse direction (18).

8. The light guide (2) as claimed in one of claims 1 to 6, **characterized in that** the portion of constant profile has said constancy over the whole of the total extent of the entrance face (6), considered in said transverse direction (18).

9. The light guide (2) as claimed in one of claims 1 to 8, **characterized in that** the exit face (14) extends along the main direction (4) and has a height shorter than or equal to 30% of an average diameter of the light guide.

10. The light guide (2) as claimed in one of claims 1 to 9, **characterized in that** the decoupling face (12) is opposite the exit face (14) with respect to the main direction (4).
